Europäisches Patentamt

European Patent Office

Office européen des brevets

Publication number: **0 274 201**

**A1**

# EUROPEAN PATENT APPLICATION

Application number: **87310195.0**

Int. Cl.⁴ **G01P 15/125**

Date of filing: **19.11.87**

Priority: **29.11.86 GB 8628611**

Date of publication of application:
**13.07.88 Bulletin 88/28**

Designated Contracting States:
**AT BE CH DE ES FR GB GR IT LI LU NL SE**

Applicant: **THORN EMI plc**
**4 Tenterden Street**
**London W1R 9AH(GB)**

Inventor: **Etienne, Stephen David**
**29, Willowtree Lane**
**Hayes Middlesex UB4 9BD(GB)**
Inventor: **Young, Donald Clifford**
**3 Wilder Avenue**
**Pangbourne Berks.(GB)**

Representative: **Marsh, Robin Geoffrey et al**
**Thorn EMI Patents Limited The Quadrangle**
**Westmount Centre Uxbridge Road**
**Hayes Middlesex, UB4 0HB(GB)**

## Accelerometer.

An accelerometer comprises a substrate (10) mode of silicon and a torsion beam (R4) spanning a V-shaped recess (11) formed in a major surface of the substrate. In one embodiment the centre of mass C of the torsion member is offset from the pivot axis XX, the accelerometer being responsive to a lateral acceleration acting transversely of the torsion beam. In another embodiment the centre of mass C lies on the pivot axis XX, the accelerometer being responsive to a rotational acceleration acting about the pivot axis. A multi-axis accelerometer includes one or more of the lateral and rotational accelerometer in combination.

FIG.2b

# ACCELEROMETER

This invention relates to an accelerometer fabricated from a semiconductor material (eg silicon), and the invention relates particularly, though not exclusively, to a multi-axis accelerometer.

Semiconductor-based accelerometers are known, and an article entitled "Micromechanical Accelerometer Integrated with MOS Detection Circuitry", IEEE Transactions on Electron Devices, Vol. ED-29, No. 1, January 1982 by K.E. Petersen, A. Shartel, and N.F. Raley describes a uniaxial accelerometer, commonly referred to as a cantilever beam accelerometer.

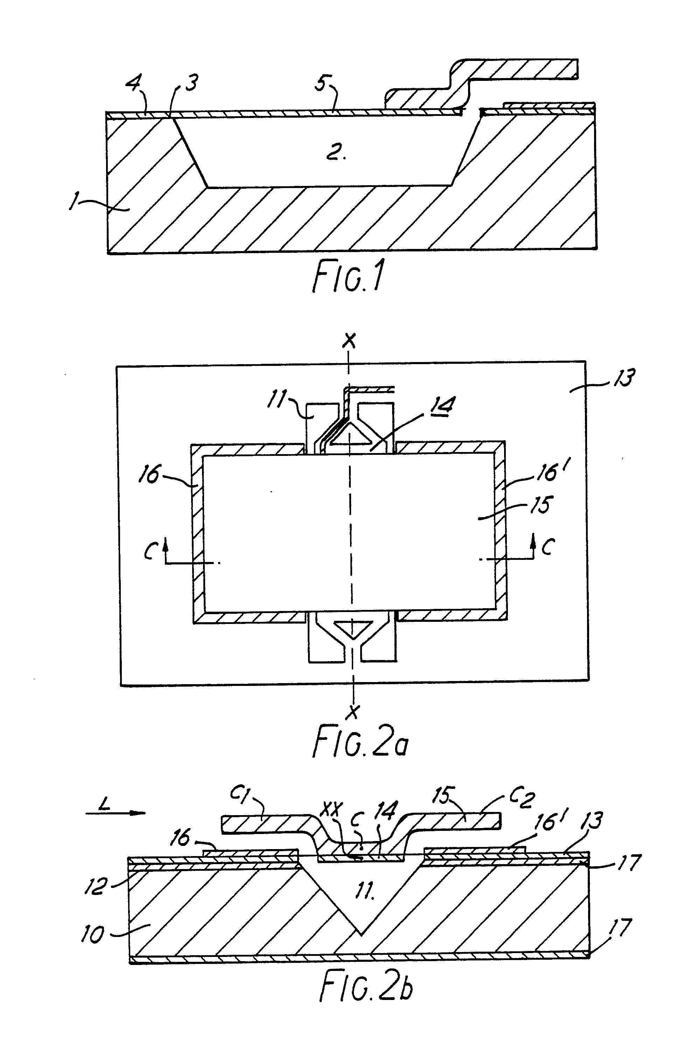

Figure 1 of the accompanying drawings shows a longitudinal, cross-sectional view through an accelerometer of the kind described in the article. The accelerometer comprises a substrate 1 of silicon with a shallow recess 2 formed in a major surface 3. A layer 4 of silicon dioxide, covering surface 3, is patterned to define a cantilever beam 5 overlying the recess, and the beam can bend by a measurable amount related to an acceleration, or a component of acceleration, acting orthogonally with respect to surface 3.

The accelerometer, which can be fabricated using semiconductor processing techniques, may have dimensions, typically of the order of a few millimeters. A minaturised device of this kind is clearly beneficial especially if space and/or payload are limited, and since the sensor has a relatively small mass (typically a few hundreths of a gram) it will not, in general, affect significantly the dynamics of a body on which it is mounted.

It is an object of the present invention to provide a different kind of semiconductor-based accelerometer.

In accordance with one aspect of the invention an accelerometer comprising a substrate made of a semiconductor material, a recess formed in a major surface of the substrate, a torsion member spanning the recess and means responsive to a torque acting about the pivot axis of the torsion member produced by acceleration of the sensor, the centre of mass of said torsion member being so arranged that, in use, the sensor is responsive to an acceleration, or to a component of acceleration, having an acceleration vector which lies in, or is parallel to, the plane of said major surface.

In one embodiment the centre of mass of the torsion member is offset from said pivot axis, the accelerometer being responsive to a lateral acceleration, or a lateral component of acceleration acting transversely with respect to the torsion member.

In another embodiment the centre of mass of the torsion member lies on said pivot axis, the accelerometer being responsive to a rotational acceleration, or a component of rotational acceleration acting about said pivot axis.

Said recess may extend from one major surface of the substrate to an opposite major surface.

Said torque responsive means may preferably comprise capacitive means responsive to a displacement of the torsion member relative to the substrate.

According to a further aspect of the invention there is provided a multi-axis accelerometer including a plurality of acceleration sensors, at least one of said sensors being in accordance with said one aspect of the invention.

According to a yet further aspect of the invention there is provided a method of fabricating an accelerometer including the steps of preparing a monocrystalline substrate of a semiconductor material, depositing a layer of an electrically insulative material on major surface of the substrate, selectively etching said layer to define a torsion member, depositing a seismic mass on the torsion member and etching away semiconductor material from beneath the beam.

Specific embodiments of the invention will now be described, by way of example only, by reference to the accompanying drawings of which:-

Figure 1 shows a longitudinal, cross-sectional view through an accelerometer of the cantilever beam type,

Figures 2a and 2b shows plan and transverse, cross-sectional views respectively through a lateral accelerometer,

Figure 2c shows a plan view of an electrically insulative layer used in the accelerometer of Figures 2a and 2b,

Figures 2d and 2e show different transverse, cross-sectional views through the insulative layer of Figure 2c,

Figure 3 shows a detection circuit for use in the accerlerometer of Figures 2,

Figures 4a-4d show a transverse, cross-sectional view through a lateral accelerometer at different stages of fabrication,

Figure 5 shows a transverse, cross-sectional view through a rotational accelerometer and

Figures 6a-6d show a transverse, cross-sectional view through a rotational accelerometer at different stages of fabrication.

Figure 7 illustrates schematically a multi-axis accelerometer.

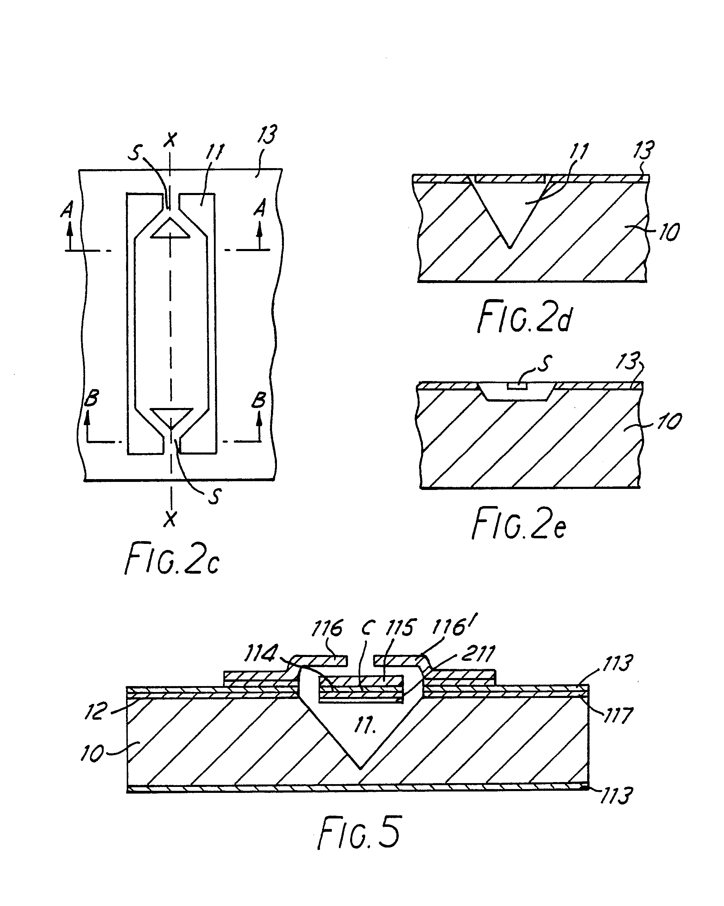

The accelerometer which is illustrated in Figures 2a and 2b of the drawings, and which will be referred to hereinafter as a lateral accelerometer, comprises a substrate 10 of a semiconductor material. p-type silicon in this example, with a recess 11, generally V-shape in cross-section, formed in a major surface 12. A layer 13 of an electrically insulative material, deposited at surface 12, is patterned to define a torsion member in the form of a generally elongate torsion beam 14 which spans, and extends lengthwise of, the recess and which can pivot about a longitudinal pivot axis XX. Figures 2c, d and e illustrate the configuration of the torsion beam and its associated suspensions, referenced at S. The inventors have found silicon oxynitride to be a suitable insulative material having particularly beneficial mechanical properties. Alternatively, though, other materials including silicon dioxide or silicon nitride could be used.

The torsion beam includes a seismic mass 15 made of a suitably dense material eg gold or nickel, this material being so distributed that the centre of mass C of the beam is offset from the pivot axis XX. As shown in Figure 2b, the centre of mass C lies in a plane which contains axis XX and is orthogonal to surface 12. With this configuration the accelerometer is rendered responsive to a lateral acceleration, that is an acceleration which acts, or includes a component which acts, transversely of the beam, as exemplified by arrow L in the drawings. In this case the acceleration vector lies in, or is parallel to surface 12.

A lateral acceleration of this kind subjects the beam to a torque which acts about the pivot axis XX, and, in this example, an applied torque is measured using a pair of displacement capacitors shown generally at C₁ and C₂. Each capacitor includes a fixed electrode 16, 16′ (of gold or nickel say) which is deposited on the substrate on a respective side of the recess, and the seismic mass 15 is configured as a plate defining a common electrode overlying the fixed electrodes. It will be apparent that the common electrode can pivot about axis XX in response to an applied torque, approaching one of the fixed electrodes, giving rise to an increased capacitance, and receding from the other fixed electrode, giving rise to a reduced capacitance. These capacitance changes, which occur in opposite senses, can be measured using a suitable detection circuit, for example a bridge-type circuit of the kind described in the afore-mentioned paper. Measurement signals generated in respect of each capacitor C₁, C₂ may be compared differentially to generate an output signal representing the magnitude of a lateral acceleration to which the sensor is being subjected.

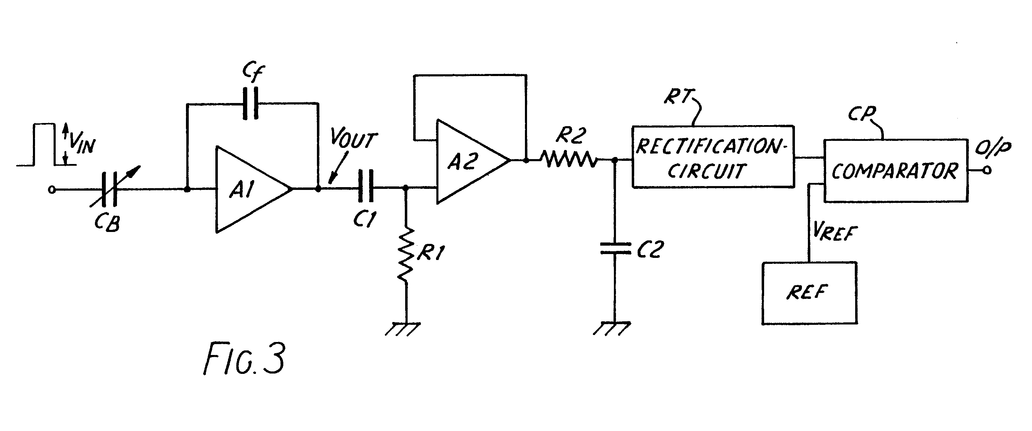

In some applications, the capacitance changes produced maybe relatively small, of the order of 10⁻¹⁴ farads say, and in these circumstances a charge-sensitive detection circuit of the kind shown in Figure 3 is found to be beneficial. This circuit includes an amplifier A1 which is used in a change-sensitive mode, an output voltage $V_{OUT}$ of the amplifier being given by the expression,

$$V_{OUT} = \frac{V_{IN} \, C_B}{C_f} ,$$

where $C_f$ is a feedback capacitance, $C_B$ is the capacitance between the common electrode and a fixed electrode, and $V_{IN}$ is an input voltage supplied to the amplifier. Typically the input voltage may comprise one, or a series of, rectangular pulses, of constant amplitude, supplied by means of a suitable pulse generator, though alternatively a sinusoidal input voltage could be used.

The output voltage $V_{OUT}$ is fed through a differentiating circuit (C1, R1), a buffer amplifier (A2) and an integrating circuit (CR, R2) which have the effect of increasing signal-to-noise ratio, and the output signal is then passed to a rectification circuit RT. The rectified output voltage is then compared in a comparator CP with a reference voltage $V_{REF}$ which represents the capacitance in the absence of an applied torque, an output O/P of the comparator being proportional to a change of capacitance which arises when a torque is applied.

Detection circuitry as described hereinbefore could be provided as a discrete unit or, more desirably, incorporated on the same semiconductor substrate as the beam and electrodes. The latter approach leads to an enhanced signal-to-noise ratio and, moreover, tends to reduce interfacing problems with other CMOS or NMOS processing circuits, especially digital circuits which could be used in conjunction with the sensor.

In an alternative arrangement a torque acting on the torsion beam is measured using a servo system. This system produces a control signal which is utilised in a feedback circuit to apply an electrostatic restoring force between the respective electrode pairs of capacitors C1 and C2 which is sufficient to counter balance the torque acting on the beam and so maintain the electrodes in stable relative positions. The control signal, therefore, is directly related to the torque and so to an acceleration to which the sensor has been subjected.

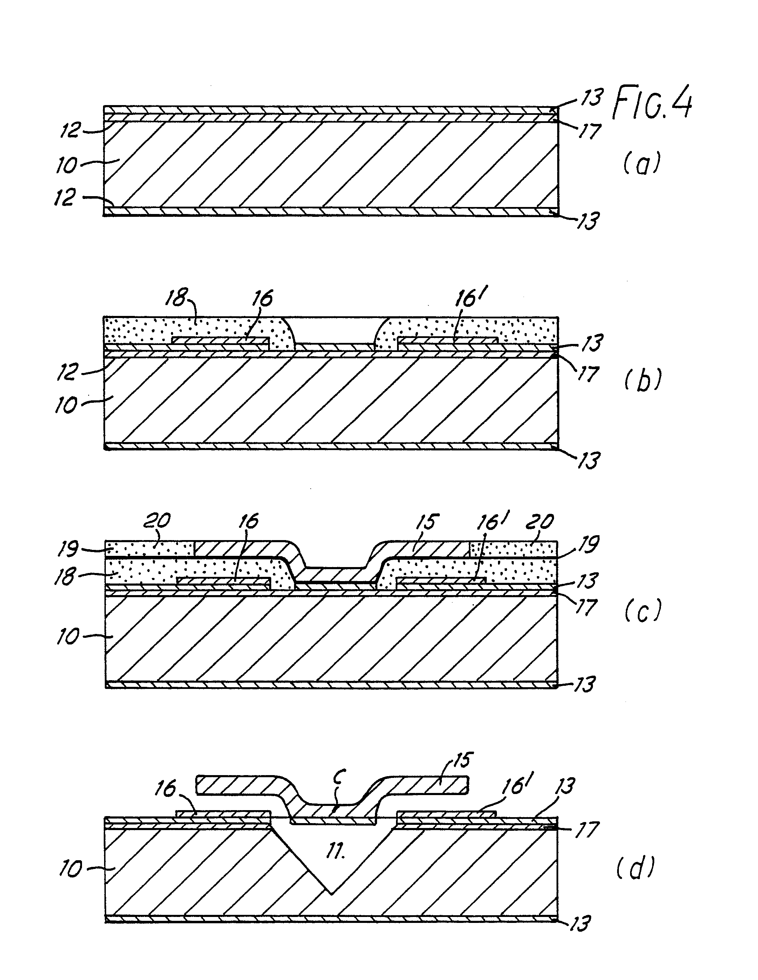

The lateral accelerometer shown in Figures 2 and 3 may be fabricated in stages as illustrated in Figures 4a-4d.

Stages (i) - (iv) (Figure 4a)

(1) A p-type monocrystalline silicon wafer 10 typically 350 μm thick is prepared with major surfaces 12 lying in the (100) plane.

(ii) An epitaxial layer 17 of p-type silicon is grown on the upper surface of the wafer to a depth of about 5 $\mu$m.

(iii) A layer 13 of an electrically insulative material e.g. silicon dioxide or silicon oxynitride typically 0.5 $\mu$m thick is deposited on the upper and lower surfaces.

(iv) At this, and subsequent, stages associated electrical circuits may be defined in the wafer, as required, and selected regions doped with boron to a p concentration of the order of $10^{20}$ cm $^3$.

## Stages (v) - (vii) (Figure 4b)

(v) Layer 13 is selectively etched to define the location of the torsion beam and its suspensions.

(vi) Layers of suitable metals such as chromium and gold, or aluminium, typically 0.5$\mu$m thick are deposited on the insulative layer and patterned photolithographically to define fixed electrodes 16, 16'.

(vii) A layer 18 of a photoresist is deposited to define spacers, approximately 5 $\mu$m thick, to support the overhanging portions of seismic mass 15.

## Stages (viii) - (x) (Figure 4c)

(viii) A metal plating base 19 is deposited on the wafer.

(ix) An additional layer 20 of a photoresist is deposited to define the edges of seismic mass 15.

(x) Mass 15 is deposited by electroplating a suitable metal e.g. gold or nickel, typically to a depth of about 5$\mu$m.

## Stages (xi) and (xii) (Figure 4d)

(xi) The photoresist and excess plating base are cleared away.

(xii) The wafer is subjected to an anisotropic etchant to create a V-shaped recess 11 and so free the torsion beam with mass 15 in place.

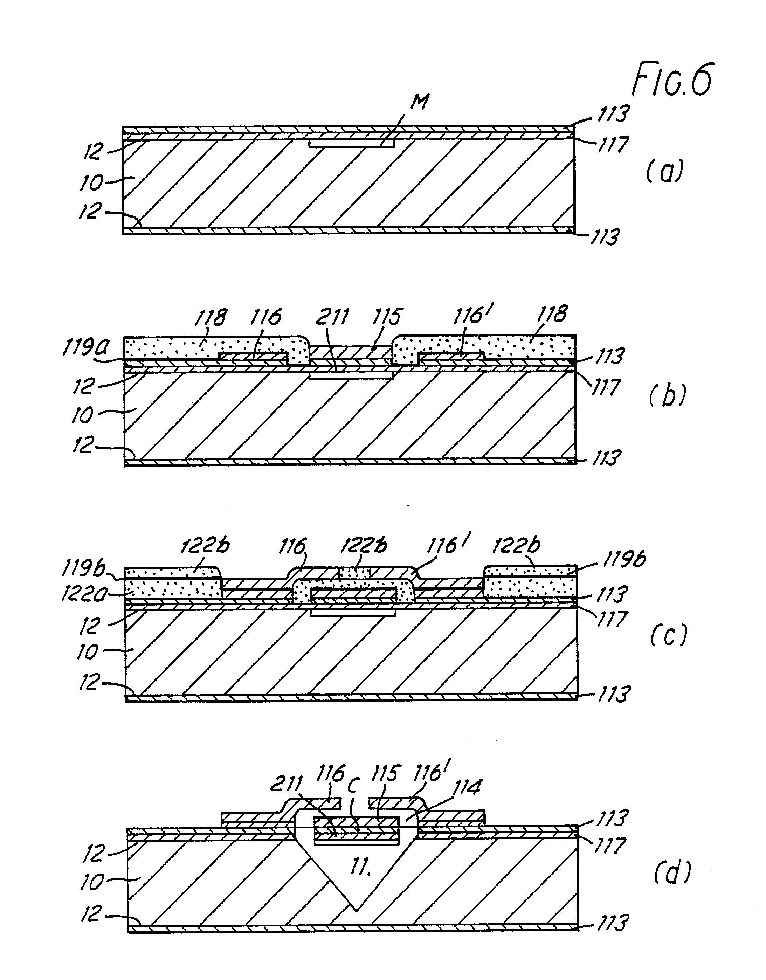

Figure 5 illustrates, by way of example, a different accelerometer, hereinafter referred to as a rotational accelerometer, in accordance with the present invention. The rotational accelerometer is similar to the lateral accelerometer described by reference to Figures 2 to 4, but differs therefrom in that the centre of mass C of the torsion beam 114 lies on longitudual axis XX, about which the beam can pivot. This can be achieved by arranging that a mass 211 of silicon, disposed below insulative layer 113 of the beam, exactly balances a seismic mass 115, of gold or nickel for example, disposed above layer 113. With this configuration the acceleration vector lies along the pivot axis XX, being the accelerometer is responsive to a rotational acceleration which acts, or includes a component which acts, about the pivot axis XX, and is insensitive to a lateral acceleration. As before, an applied torque can be measured using a pair of displacement capacitors, though in this case the fixed electrodes 116,116' overhang the common electrode presented by seismic mass 115. Circuitry of the kind described hereinbefore in relation to a lateral accelerometer is also applicable to a rotational accelerometer.

Fabrication of the rotational accelerometer shown in Figure 5 is similar to that of the lateral accelerometer and is described by reference to Figures 6a-6d.

## Stages (i)-(v) (Figure 6a)

(i) A p-type monocrystalline silicon wafer 10 typically 350 $\mu$m thick is prepared with major surfaces 12 lying in the (100) plane.

(ii) Selected regions of the wafer, specifically the region referenced M where mass 211 is to be formed, are doped heavily with boron to a p concentration of the order of $10^{20}$ cm $^3$.

(iii) An epitaxial layer 117 of p-type silicon is grown on the upper surface of the wafer 12 to depth of about 5 $\mu$m.

(iv) A layer 113 of an electrically insulative material e.g. silicon dioxide or silicon oxynitride, typically 0.5 $\mu$m thick, is deposited on the upper and lower surfaces.

(v) At this, and subsequent stages, associated electrical circuits may be defined in the wafer, as desired, and selected regions of the wafer doped heavily with boron to a p concentration of the order of $10^{20}$ cm $^3$

## Stages (vi) - (viii) (Figure 6b)

(vi) Layer 113 is selectively etched to define the location of the torsion beam and its suspensions.

(vii) Layers of suitable metals such as chromium and gold, or aluminium, typically 0.5 $\mu$m thick, are deposited on the insulation layer and patterned photolithographically to define, in part, the fixed electrodes 116, 116'.

(viii) A metal plating base 119a is deposited on the upper surface of the wafer.

(ix) A layer 118 of a photoresist, typically 5 μm thick, is deposited on the wafer in order to define the seismic mass.

(x) The seismic mass 115 is deposited by electroplating a metal such as gold or nickel to a thickness such that the two parts 115, 211 have the same mass and beam 114 is balanced about the line of the pivot.

Stages (xi)-(xx) (Figure 6c)

(xi) The photoresist 118 and excess plating base 119a are cleaned away.

(xii) A further layer 122a of a photoresist is deposited onto the wafer to define spacers about 5 μm thick in order to support overhanging electrodes.

(xiii) A further metal plating based 119b is deposited on the upper surface of the wafer.

(xix) A further layer 122b of a photoresist is deposited on the wafer to define boundaries for the overhanging electrodes.

(xx) A metal such as gold or nickel is electroplated to create the overhanging portions of electrodes 116, 116'.

Stages (xxi) and (xxii) (Figure 6d)

(xxi) The photoresist and excess plating base are cleaned away

(xxii) The wafer is subjected to an anisotropic etchant to create a V-shaped recess 11 and so free the torsion beam with masses 115 and 211 in place.

It will be understood that the procedures outlined hereinbefore by reference to Figures 4 and 6 are given by way of example only. Modifications of, and alterations to, these procedures will be apparent to persons of ordinary skill in the art. More specifically, it would be possible to provide a recess 11 extending from one major surface of the wafer to the opposite major surface and, in these circumstances, an anisotropic etchant could be applied at both major surfaces.

Displacement capacitors need not necessarily be used to detect a torque acting on the torsion beam of the lateral and rotational accelerometers described hereinbefore. Alternatively, for example, one or more strain guages could be incorporated in or on the torsion beam, preferably at its ends or a piezoelectric film of ZnO, for example, could be used. Suitable bridge circuits could be used to process the signals produced by the strain guage(s) or piezoelectric film. It will be appreciated that a seismic mass used in the lateral and rotational accelerometers, as described hereinbefore, could be made of a material other than a metal, for example of silicon or as an extension of the electrically insulative layer. If, in these circumstances, a common electrode is needed for the measurement of capacitance this could be provided as a plated layer.

It will be appreciated that two lateral accelerometers, arranged orthogonally with respect to one another in the same wafer, can be used to measure the magnitude and direction of any lateral acceleration acting in a plane parallel to a major surface of the wafer. Similarly, two rotational accelerometers arranged orthogonally with respect to one another can be used to measure the magnitude and direction of any rotational acceleration acting along a direction lying in the plane of the wafer.

Although, as described hereinbefore, a lateral accelerometer responds to an acceleration acting transversely of the torsion beam, the device could also respond to a rotational acceleration acting simultaneously about the longitudual pivot axis of the beam.

However, any possible ambiguity may be resolved by comparing, in suitable post processing circuits, signals produced simultaneously by lateral and rotational accelerometers orientated along the same, or parallel, axes.

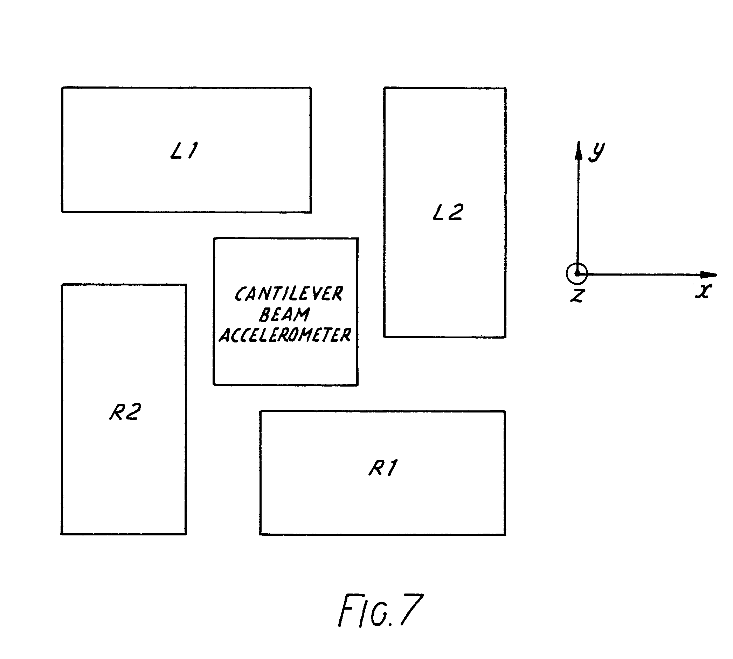

In an embodiment of the invention a multi-axis accelerometer, illustrated schematically in Figure 7, includes five accelerometers, namely two lateral accelerometers (L1, L2) responsive to lateral accelerations in the y and x directions respectively, two rotational accelerometers (R1, R2) responsive to rotational accelerations about the x and y directions respectively, and a cantilever beam accelerometer all fabricated in a common surface of a wafer of silicon responsive to Z axis acceleration. The torsion and cantilever beams would be created by appropriately patterning a common layer of insulative material e.g. silicon dioxide, silicon nitride or silicon oxynitride. The two lateral accelerometers (in conjunction with the rotational accelerometers) are used to measure, without ambiguity, the magnitude and direction of a lateral acceleration, the two rotational accelerometers are used to measure the magnitude and direction of a rotational acceleration and the cantilever beam accelerometer is used to measure an acceleration which acts orthogonally with respect to the common surface. A multi-axis accelerometer of this kind can be used to measure the magnitude and direction of the total acceleration vector acting.

A multi-axis accelerometer, being fabricated in a common surface, is particularly amenable to application of planar processing techniques, and errors due to misalignment of individual accelerometers can be significantly reduced.

## Claims

1. An accelerometer comprising a substrate made of a semiconductor material, a recess formed in a major surface of the substrate, a torsion member spanning the recess and means responsive to a torque, acting about the pivot axis of the torsion member produced by acceleration of the sensor, the centre of mass of said torsion member being so arranged that, in use, the sensor is responsive to an acceleration, or to a component of acceleration, having an acceleration vector which lies in, or is parallel to, the plane of said major surface.

2. An accelerometer according to Claim 1 wherein the centre of mass of said torsion member is offset from said pivot axis, the sensor being responsive to a lateral acceleration, or to a lateral component of acceleration acting transversely with respect to the torsion member.

3. An accelerometer according to Claim 1 wherein the centre of mass of said torsion member lies on said pivot axis, the sensor being responsive to a rotational acceleration, or a component of rotational acceleration acting about said pivot axis.

4. An accelerometer according to any one of Claims 1 to 3 wherein said torque responsive means comprises a capacitive means responsive to a displacement of the torsion member relative to the substrate.

5. An accelerometer according to Claim 4 wherein said capacitive means comprises first and second capacitors capable of generating respective capacitance changes, of opposite sense, in response to a said displacement.

6. An accelerometer according to Claim 5 wherein said first and second capacitors comprise respective first and second electrodes mounted on the substrate and a common electrode on the torsion member.

7. An accelerometer according to Claim 5 or Claim 6 including an electrical circuit for comparing the capacitances of said first and second capacitors.

8. An accelerometer according to any one of Claims 1 to 3 wherein said torque responsive means comprises respective electrodes mounted on the substrate and the torsion member, and circuitry effective to generate a servo signal indicative of said torque and to utilise the servo signal to apply an electrostatic restoring force between the electrodes sufficient to offset said torque.

9. A multi-axis accelerometer including a plurality of acceleration sensors, at least one of said sensors being in accordance with any one of Claims 1 to 8.

10. A multi-axis accelerometer according to Claim 9 wherein said plurility of acceleration sensors is formed in the same surface of a substrate.

11. A multi axis accelerometer according to Claim 9 or Claim 10 including two said sensors responsive respectively to accelerations, or components of acceleration, in mutually orthogonal directions parallel to said major surface, two said sensors responsive to respective rotational accelerations, or components of rotational acceleration, about mutually orthogonal directions and a further sensor responsive to an acceleration normal to said major surface.

12. A method for fabricating an accelerometer including the steps of preparing a monocrystalline substrate of a semiconductor material,

depositing a layer of an electrically insulative material on a major surface of the substrate

selectively etching said layer to define a torsion member, depositing a seismic mass on the torsion member and etching away semiconductor material from beneath the beam.

13. A method of fabricating an accelerometer according to Claim 12 including the additional steps of depositing a layer of an electrically conductive material on selected regions of said layer of an electrically insulative material to create thereon a pair of electrodes,

controlling deposition of said seismic mass to define a further electrode overlying said pair of electrodes.

14. A method of fabricating an accelerometer according to Claim 12 including the additional steps of

treating said substrate such that said torsion member includes a mass of said semiconductor material following said etching step,

and so controlling deposition of said seismic mass that the centre of gravity of the member lies on a pivot axis of said member.

15. An accelerometer substantially as herein described by reference to Figures 2 to 6 of the accompanying drawings.

16. A method of fabricating an accelerometer substantially as herein described.

FIG.1

FIG.2a

FIG.2b

FIG.2c

FIG.2d

FIG.2e

FIG.5

FIG.3

0 274 201

FIG.4

(a)

(b)

(c)

(d)

Fig.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 561 389 (THE CHARLES STARK DRAPER LABORATORY) * Page 1, line 36 - page 2, line 2; page 6, line 28 - page 7, line 14; page 3, lines 8-12; page 12, lines 13-19; page 13, line 34 - page 14, line 7; figures 1-3,6 * | 1,2,4,5 | G 01 P 15/125 |
| Y | | 3,7 | |
| A | | 6 | |
| | --- | | |
| Y | EP-A-0 007 583 (HUGHES AIRCRAFT CO.) * Page 6, line 1 - page 7, line 5; figures 1-4 * | 3 | |
| | --- | | |
| Y | GB-A-2 013 352 (SUNDSTRAND DATA CONTROL) * Page 1, lines 38-77; figure 1 * | 7 | |
| | --- | | |
| A | EP-A-0 054 707 (IBM CORP.) * Page 6, lines 12-30; page 8, lines 5-25; page 9, lines 15-32; figures 1,7 * | 1,4-10, 12,13 | |
| | --- | | TECHNICAL FIELDS SEARCHED (Int. Cl.4) |
| A | DE-A-2 553 073 (FERRANTI LTD) * Page 7, lines 10-12; figure 1 * | 2 | G 01 P |
| | --- | | |
| A | GB-A-1 583 536 (THE SINGER CO.) * Page 1, lines 8-11; figures 1,3 * | 8 | |
| | ----- | | |

The present search report has been drawn up for all claims

| Place of search | Date of completion of the search | Examiner |
|---|---|---|
| THE HAGUE | 07-03-1988 | HANSEN P. |